# EUROPÄISCHE PATENTSCHRIFT

(11) **EP 2 589 671 B1**
(45) Veröffentlichungstag und Bekanntmachung des Hinweises auf die Patenterteilung: **11.07.2018**
(21) Anmeldenummer: 12007477.8
(22) Anmeldetag: 02.11.2012
(51) Int. Cl.: C21B 3/06, C22B 7/04

(54) **Verfahren und Vorrichtung zur Einbindung und Nutzung von umweltschaedigendem Kohlendioxid**
Method and apparatus for integrating and using environmentally harmful carbon dioxide
Procédé et dispositif d'intégration et d'utilisation de dioxyde de carbone polluant

(30) Priorität: 04.11.2011 DE 102011117599
(43) Veröffentlichungstag der Anmeldung: 08.05.2013
(73) Patentinhaber: Werfel, Frank, 04277 Leipzig (DE); Beyer, Wolfgang, 04318 Leipzig (DE)
(72) Erfinder: Werfel, Frank, 04277 Leipzig (DE); Beyer, Wolfgang, 04318 Leipzig (DE)

(56) Entgegenhaltungen:
- JP-A- 58 110 423
- JP-A- 2004 238 233
- JP-A- 2007 314 854
- TAKAHASHI T ET AL: "New applications for iron and steelmaking slag", NKK TECHNICAL REVIEW, TOKYO, JP, Nr. 87, 1. Dezember 2002 (2002-12-01), Seiten 38-44, XP009166424, ISSN: 0915-0544

## Beschreibung

Die Erfindung betrifft ein Verfahren zur Einbindung und Nutzung von umweltschädigendem Kohlendioxid, insbesondere durch reaktive Verbindungen mit Abfallbestandteilen aus technischen Prozessen zur Herstellung von Kalkstein und Magnesit. Desweiteren dient dieses Verfahren auch zur Nutzung der Wärmeenergie von Schlackenabfällen der Hütten-, Stahl- und Gießereiindustrie für die Erhöhung der Reaktionsgeschwindigkeiten innerhalb der Herstellungsprozesse und bei der Einbindung des Kohlendioxids. Bei der herkömmlichen Verbrennung fossiler Rohstoffe wie Kohle, Öl und Gas gelangen bekanntlich große Mengen CO₂ mit den Verbrennungsabgasen in die Atmosphäre. Dort wirkt das CO₂ als Treibhausgas und ist die anthropogene Hauptursache der globalen Erwärmung. Dabei ist heute unstrittig, dass die erhöhte CO₂-Konzentration in der Erdatmosphäre die Erwärmung der Erdoberfläche und damit den Treibhauseffekt beschleunigt. Es ist deshalb notwendig, die globalen CO₂-Emissionen noch in diesem Jahrhundert substantiell und nachhaltig zu senken. Zwecks Reduzierung von CO₂ bei der Primär - Energieerzeugung bzw. Nutzung von Einsparpotentialen beim Energieverbrauch dient neben dem Erlernen und Anwenden von energiebewusstem Handeln der Ausbau regenerativer Energiequellen wie Wind, Sonne, Erdwärme, der effektiven Wärmedämmung und Speichermedien sowie die Entwicklung energiesparender Produktionsprozesse und umweltschonender Werkstoffe. Ebenso ist es erforderlich, in einem zweiten, aber parallelen Schritt, das unvermeidlich entstehende CO₂ durch Abtrennung, Aufbereitung, Verdichtung, Speicherung oder chemischer Bindung von der Atmosphäre fern zu halten. Auch hierfür wird eine Reihe von Technologien bereits heute untersucht. Dazu gehören die Abscheidung und unterirdische Lagerung von CO₂ (carbon capture and storage - CCS), teilweise auch gekoppelt mit integrierter Kohlevergasung (Integrated Gasification Combined Cycle - IGCC). Unter CCS ist eine Technologie zur Abscheidung und Speicherung von Kohlendioxid (CO₂) zu verstehen. Mit dieser Technologie soll die Abtrennung des CO₂ aus den Abgasen von Industrieanlagen (z.B. aus Biogasanlagen, Kraftwerken, Zementwerken, Stahlwerken, usw.) und die nachfolgende Einlagerung in tiefe geologische Gesteinsformationen erfolgen. Nach dem Konzept der CCS-Technologie wird das CO₂ bereits im Kraftwerkprozess abgeschieden. Dafür nutzt man im Wesentlichen zwei Verfahren. Nämlich den an sich bekannten Oxyfuel-Prozess und das Postcombustion-Verfahren. Im Anschluss daran wird das abgeschiedene CO₂ verflüssigt und über Pipelines, Züge und Schiffe zu den unterirdischen Endlagerungsstätten transportiert. Aktuell erforscht man zwei wesentliche Möglichkeiten zur sicheren Endlagerung des Treibhausgases. Zum einen die Speicherung in "salinen Aquiferen", also Salzwasser führenden Sandsteinschichten, und zum anderen die Speicherung in ehemaligen Erdgasfeldern.

Das von verschiedenen Ländern und auch von der Bundesrepublik Deutschland favorisierte und mit enormen Aufwand untersuchte CCS - Verfahren zur Einlagerung von CO₂ in unterirdischen Lagerstätten hat jedoch zwei entscheidende Nachteile:
1) Die geologischen Auswirkungen derart großer und künstlich erzeugter Gasspeicher, besonders über einen langen Zeitraum, sind weder ausreichend untersucht, noch im Langzeitverhalten sicher abschätzbar.
2) Beim CCS - Verfahren bleibt das CO₂ grundsätzlich als umweltschädliches Gas erhalten, es wird nicht dauerhaft und sicher gebunden, und kann in extremen Fällen von Verwerfungen in der Erdkruste, in riesigen Mengen wieder freigesetzt werden.

Ebenso unwirtschaftlich erweisen die sich ergebenden logistischen Nachteile in Form von langen Transportwegen und hohen Transportkosten.

Bei dem IGCC-Verfahren wird die Vergasung von Kohle mit einer CO₂-Abtrennung kombiniert und der Strom in nachgeschalteten Gas- und Dampfturbinen erzeugt. Zu diesem Zweck wird die Kohle nicht im herkömmlichen Dampfkraftwerk verfeuert, sondern zunächst in einem Vergaser bei hohen Temperaturen und unter einem Druck von ca. 35 bar in ein brennbares Rohgas umgewandelt. Das aus den Hauptbestandteilen Kohlenmonoxid (CO) und Wasserstoff (H₂) bestehende Gas wird gereinigt und das Kohlenmonoxid im CO-Shift mit Hilfe von Wasserdampf zu CO₂ und weiterem H₂ umgewandelt. Nach der Entschwefelung wird das CO₂ abgetrennt, verdichtet und der Speicherung zugeführt. Der verbleibende Wasserstoff wird in einer Gasturbine verbrannt, die einen Generator zur Stromerzeugung antreibt. Die entstehenden heißen Abgase, bestehend im Wesentlichen aus Luftstickstoff und reinem Wasserdampf, werden zur Dampferzeugung genutzt. Der Dampf treibt eine Dampfturbine und einen zweiten Generator zur Stromerzeugung an. Weil die Elektrizität in einer besonders effektiven Kombination von Gas- und Dampfturbine gewonnen wird, spricht man bei diesem Kraftwerksprinzip von einem "Kombikraftwerk".

Weiterhin sind für die Lösung dieses globalen Problems eine Vielzahl von technischen Lösungen vorgeschlagen worden. So ist nach der DE 10 2006 002 290 A1 ein Verfahren zur Einbindung, Nutzung und Verbrauch von Kohlendioxid in Hydraten, wie z. B. Kalk- und/oder Magnesiumhydrat bekannt gemacht worden. Nach dieser Lösung wird zwecks Verstärkung der Einbringung von Kohlendioxid in das als "Abfall" produzierte Hydratgemenge das bei der Verbrennung fossiler Brennstoffe in Kraftwerken entstehende Rauchgas vor oder nach der Filterstufe am Kamin entnommen, abgesaugt und mittels einer Kompressoranlage verdichtet. Danach wird das verdichtete Rauchgas in Lagertanks untergebracht und zur Flugascheaufbereitung genutzt. Die Nutzung des komprimierten Rauchgases erfolgt durch dessen Zuführung über Rohrleitungen zu einem Mischaggregat, in dem Flugasche mit freiem Kalziumoxid mit Wasser und/oder Schlämmen vermengt wird. Mittels Mischbewegungen bzw. Turbulenzen wird das Gemenge intensiv verwirbelt. Mit dieser Maßnahme soll eine große reaktionsfreudige Oberfläche des Hydrates geschaffen werden Dadurch wird das CO₂-haltige Rauchgas während des Mischvorganges eingebunden und der Ablauf der chemischen Reaktion der CO₂-Moleküle mit den Hydrat-Molekülen bewirkt. Nachteilig an diesem Verfahren ist jedoch der hohe technische Aufwand für die erneute Aufbereitung des Gemenges aus Flugasche und feuchten/wässrigen Additiven vor dem Abkippen in den Tagebauen/Deponien mittels Wasser oder Schlamm. Ebenso nachteilig ist der geringe Wirkungsgrad bei der Einbindung des CO₂-haltigen Rauchgases in die Recarbonatisierung.

Weiterhin ist nach der DE 2007 027 388 A1 ein Verfahren zur Abtrennung von Kohlendioxid aus einem Rauchgas mit Hilfe von Membrane bekannt gemacht geworden. Das beschriebene Verfahren und die zur Durchführung des Verfahrens dienende Vorrichtung sind für die Reduzierung von CO₂-Emissionen aus den Abgasen von Feuerungsanlagen vorgesehen. Dazu werden bei diesem Verfahren durch vorgeschaltete Wärmeübertrager oder einem Brenner die Kondensation von Wasserdampf und das Blockieren der Membranporen vermieden. Mit den vorgeschlagenen Maßnahmen sollen die Umgebungsparameter des Rauchgases für die Abtrennung des CO₂ (Entcarbonisierungsverfahren) unter Anwendung einer Membran optimiert werden. Der Aufwand an Wärmeenergie für die Wiederaufwärmung wird so reduziert. Nachteilig an diesem Verfahren ist jedoch der hohe Aufwand für die relativ geringe mengenmäßige Einbindung an CO₂ und die fehlende materialtechnische Einbindung in nutzbare Materialien.

Mit dem Verfahren nach der DE 10 2005 037 771 A1 wird eine Reduktion von CO₂ - Emissionen im Baustoffbereich durch Reaktion von CO₂ mit CaO und SiO₂ zu Belit- Zement vorgeschlagen. Das Verfahren erfolgt in zwei Stufen. In der ersten Stufe entsteht über eingebrachte Kristallisationskeime bei einer Temperatur von 100 - 300°C das Zwischenprodukt a -Dicalcium- Silikat-Hydrat ***α*** - ***CaO2SiO2H2O***. Im nachfolgenden Schritt entsteht bei 500 - 900°C das Reaktionsprodukt und nach Abkühlen scheidet sich Belit - Zement ab. Auch bei Anwendung dieses Verfahrens wird im Verhältnis zum Aufwand nur eine geringe mengenmäßige Einbindung von Kohlendioxid erreicht. Zudem bezieht sich die Verfahrensanwendung lediglich auf die Reduzierung der Emissionen im Baustoffbereich und die damit verbundene Herstellung von Belit-Zement.

Weiterhin ist eine Reaktion zwischen CO₂ und eine Schlacke auch aus JP2007314854 sowie JP58110423 bekannt. Ausgehend vom vorstehend beschriebenen Stand der Technik besteht die Aufgabe der Erfindung in der Schaffung eines Verfahrens zur dauerhaften Bindung und materialtechnisch verwertbaren Umwandlung von Kohlendioxid, das bei einem geringeren zeitlichen und Energieaufwand sowie geringeren logistischen Aufwänden den Eintritt von Kohlendioxid in die Atmosphäre wesentlich verringert. Gelöst wird diese Aufgabe durch das geschaffene Verfahren mit den beschreibenden Merkmalen nach Patentanspruch 1. Vorteilhafte Weiterbildungen des Verfahrens werden mit den kennzeichnenden Merkmalen der Patentansprüche 2 bis 4 beschrieben. Das erfindungsgemäße Verfahren dient zur Minderung von CO₂ durch chemische Bindung und thermischen Reaktionen. Es nutzt die Reaktionsprodukte und Schlacken von Hochöfen unmittelbar nach dem Vorgang des Abstiches und bindet das umweltschädigende Kohlendioxid CO₂, wie es etwa in Kraftwerken mit fossilen Brennstoffen und Verbrennungsanlagen entsteht, chemisch und damit dauerhaft. Das in die Atmosphäre gelangende CO₂ wird durch die chemische Reaktion von CO₂ mit der Hochofenschlacke wesentlich gemindert und dient so dem Schutz des Klimas als auch der Förderung energietechnischer Innovationen. Durch die bei der Anwendung des Verfahrens entstehenden Materialien wie z.B. Calciumcarbonat (Kalkstein) und Magnesiumcarbonat (Magnesit) entsteht außerdem ein hoher Nutzen für benachbarte große Wirtschaftsbereiche, wie beispielsweise das gesamte Bauwesen. Bei den dem Verfahren zugrundeliegenden Reaktionsprozessen werden die Produkte eng miteinander verbundener Industriezweige genutzt. So werden bei einer vorzugsweisen Verbindung zum einen die entstehenden Abfallschlacken bei der Eisen- und Stahlproduktion und zum anderen die klimaschädlichen Mengen an Kohlendioxid, die besonders bei der Verbrennung von fossilen Brennstoffen in den Stein- und Braunkohlekraftwerken zur Erzeugung von elektrischer Energie emittiert werden, reaktiv miteinander in Verbindung gebracht. Nicht unbedeutende Mengen an CO₂ entstehen gleichermaßen bei der Holz- bzw. Mischfeuerung von Kohle und Holz im Industriesektor aber auch auf privatem Sektor. Nachfolgend soll die Erfindung anhand eines Ausführungsbeispiels näher erläutert werden. Die Darstellungen in der Zeichnung zeigen in
- **Fig. 1:**: die schematische Zuordnung eines Kohlekraftwerkes zu einem Hochofen und

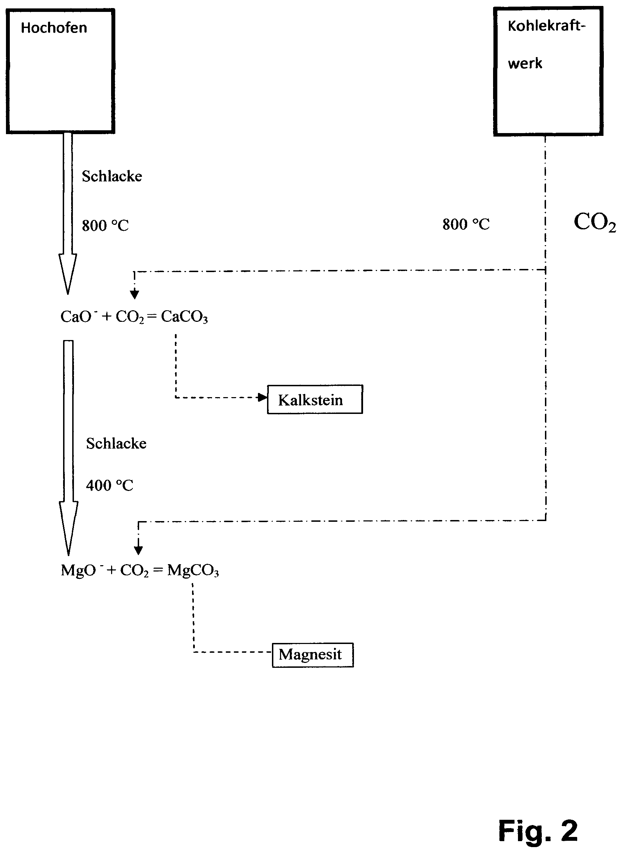

- **Fig. 2:**: den schematischen Ablauf des Verfahrens bei der Zusammenführung von Bestandteilen der Abfallschlacke aus Hochöfen mit dem erzeugten CO₂ aus Kohlekraftwerken.

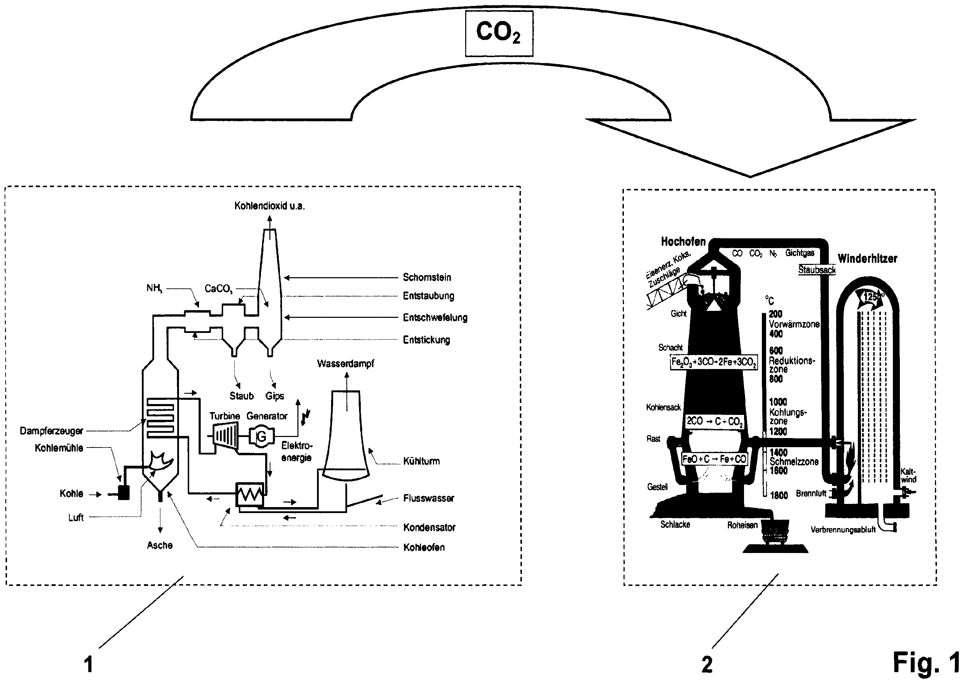

Die Darstellung in Figur 1 gibt die prinzipielle Zuordnung eines sich in unmittelbarer Nähe eines Stahlwerkes angesiedelten Kohlekraftwerkes 1 wieder, dessen CO₂ - Ausstoß bei der Energieerzeugung dem Bereich des Schlackenabflusses eines Hochofens 2 zugeführt wird. Unter Ausnutzung der vorhandenen Wärmeenergie der Schlacken wird das Kohlendioxid ohne weitere Energiezufuhr eingebunden und dabei u.a. Kalkstein und Magnesit gewonnen.

Die Art und Menge der anfallenden Schlacken sind durch die Verfahren der Eisen - und Stahlproduktion geprägt. So werden zur Stahlerzeugung unterschiedliche Technologien angewandt, bei denen die Verflüssigung des Eisens durch eingeblasenen Sauerstoff gemein ist. Durch Zugabe von Kalk oder gebrannten Kalkverbindungen werden die unerwünschten Begleitelemente wie Schwefel, Phosphor Kohlenstoff verbrannt und gehen in das Rauchgas oder die Schlacke über. Bei der Eisen- und Stahlerzeugung entstehen Mengen bis zu 50% der erschmolzenen Eisenmetalle an Abfällen, vor allem Schlacken. Die Hochofenschlacken als auch Stahlwerksschlacken werden flüssig vom Metallbad abgezogen und hauptsächlich zu Bau- und Zuschlagsstoffen verarbeitet. Die stoffliche Zusammensetzung der Schlacken wird durch das zu erschmelzende Eisenerz und die Zuschlagstoffe bestimmt. Daher schwanken die Bestandteile der Schlacken aus verschiedenen Hüttenprozessen. Die Eisenhüttenschlacke entsteht als Gesteinsschmelze bei etwa 1650 Grad Celsius während der Verarbeitung von Roheisen, Eisenschwamm oder Schrott zu Stahl. Sie bildet sich aus den oxidierten Begleitelementen des Roheisens und anderer metallischer Stoffe sowie dem zur Schlackenbildung zugesetzten Kalk oder gebrannten Dolomit. Je nachdem, wie der Stahl erzeugt wird, unterscheidet man zwischen den LD-Schlacken aus dem Blasstahlverfahren und den Elektroofenschlacken aus dem Elektrostahlverfahren.

Tabelle I gibt die mittlere Zusammensetzung von Hochofenschlacken an. Kalk, Silizium und Magnesium bilden die Hauptbestandteile der Schlacke. Die durchschnittliche Zusammensetzung von Schlacken gemäß DIN 52100, Teil II, Ziff. 6.1 ist:

**Tabelle 1: Zusammensetzung von Schlacken in Gew.% nach DIN 52100, Teil II, Ziff.6.1**

| Gew.% | Hochofen | LD | Elektroofen |
|---|---|---|---|
| SiO2 | 36 | 18 | 13 |
| Al2O3 | 10.2 | 2.0 | 6.0 |
| CaO | 40 | 49 | 26 |
| MgO | 9.5 | 2.5 | 5 |
| TiO2 | 1.2 | | |
| Fe | 0.3 | 18 | 22 |
| MnO2 | 0.6 | 4.2 | 0.2 |

Nach dem derzeitigen Stand der Technik entstehen pro Tonne Roheisen ca. 250 kg Hochofenschlacke und ca. 120 kg Stahlwerksschlacke/t Rohstahl. Insgesamt fallen in Deutschland ab 2005 ca. 7,5 Mio. t Hochofenschlacke, 4,8 Mio. t kalksilikatische Stahlwerksschlacke inklusive ca. 1 Mio. t Elektroofenschlacke an, die gemäß den gesetzlichen Anforderungen (Kreislaufwirtschaftsgesetz, Bundes-Immissionsschutzgesetz) vorrangig zu verwerten sind.

Hochofenschlacke wird heute durch langsames Abkühlen zu kristalliner Hochofenstückschlacke oder durch eine schnelle Abkühlung in Wasser zu amorphen Hüttensand verarbeitet. Die bei der Abkühlung gebildeten Hauptkristallphasen sind Gehlenit (2CaO*Al2O3*SiO2), Ackermanit (2CaO*MgO*2SiO2) und Dicalciumsilikat (2CaO*SiO2). In MgO - reichen Schlacken entstehen Periklas (MgO) und Spinell (MgO*Al2O3). Die Reaktivität einer reinen kristallinen ist deutlich kleiner im Vergleich zu einer glasig- amorph erstarrten Hochofenschlacke.

Kohlendioxid entsteht bei der Verbrennung von Kohlenstoff oder Kohlenwasserstoffen mit Sauerstoff. Der eigentliche Verbrennungsvorgang ist eine Redoxreaktion, bei der der Kohlenstoff 4 Elektronen aufnimmt. Der zur Reaktion notwendige Sauerstoff kann sowohl in reiner Form als auch als Bestandteil von Gasgemischen vorliegen. Formal wird der Sauerstoff von der Oxidationsstufe O durch Aufnahme von 2 Elektronen in den chemischen Zustand 2- überführt, d.h. reduziert. Der Kohlenstoff gibt an die zwei beteiligten Sauerstoffatome jeweils 2 Elektronen ab und wird in den Zustand 4+ überführt.

Die vollständige Verbrennung von Kohlenstoff führt zum Kohlendioxid:

| | |
|---|---|
| C + O₂→ CO₂ | ΔH°= -394 kJ/mol |

Die Bildungsenthalpie ΔH° des Kohlendioxids CO2 beträgt -394 kJ /mol, d.h. bei der Bildung von 1 mol CO2 wird eine Wärmemenge von 394 kJ frei.

Bei unvollständiger Verbrennung entsteht neben dem CO₂ auch das giftige Kohlenmonoxid:

| | | |
|---|---|---|
| 2C + O₂ → 2 CO | ΔH°= -222 kJ/mol | exotherme Reaktion |

Die Verbrennung von Kohlenwasserstoffen führt ebenfalls zum CO₂.

C₆H₆ + 71/2 O₂ → 6 CO₂ + 3 H₂O

Wie eng die heutigen Prozesse zur Energieerzeugung mit der Entstehung von CO2 zusammenhängen, zeigen folgende Betrachtungen:
Erzeugung von 1 kWh (im Energie-Mix)) → 0.55 kg CO2

| | | | |
|---|---|---|---|
| Verbrennung von | 1 l Heizöl | setzt | 2.44 kg CO2 frei |

Auch beim Hochofen- Prozess spielt das Kohlendioxid bei der Verbrennungsreaktion eine entscheidende Rolle. Im Reaktionsschema entsteht Eisen im Ergebnis der direkten oder indirekten Reduktion:
Direkte Reduktion:

| | |
|---|---|
| C + O₂ → CO₂ | ΔH°= -394 kJ/mol |
| CO2 + C → 2CO | ΔH°= +173 kJ/mol (*Boudouard-Gleichgewicht*) |
| Fe203 + 3CO → 3CO2 + **2Fe** | |

Indirekte Reduktion:

| | |
|---|---|
| (3a) 3Fe203 + CO →2Fe304 + CO2 | ΔH°= -47 kJ/mol |
| *(3b)* Fe3O4 + CO → 3FeO + CO2 | ΔH°= +37 kJ/mol |
| *(3c)* FeO + CO → **Fe** + CO2 | ΔH°= -17 kJ/mol |

Derzeit produziert Deutschland ca. 830 Mio. Tonnen CO₂ pro Jahr und weltweit wird die CO₂-Erzeugung auf 32 Milliarden Tonnen geschätzt.

Die erfindungsgemäße Idee beruht auf dem Zusammenführen und der Reaktion der heißen Hüttenschlacken, die in den Verbrennungsräumen der Hüttenwerke bei der Eisen- und Stahlherstellung auf eine Temperatur von etwa 800°C aufgeheizt werden, unmittelbar nach dem Abstich mit aufgefangenen, abgespaltenen oder gespeicherten Kohlendioxid CO₂. Dabei finden folgende grundlegende Reaktionen der CaO- und MgO - Bestandteile der Schlacke mit CO₂ statt:
1. Reaktion des CO₂ mit Kalziumoxid / Brannt- oder Freikalk [CaO]

| | |
|---|---|
| CaO + CO₂ → CaCO₃ | ΔH° = - 178 kJ/mol |

Die entsprechende Reaktionsgleichung ergibt sich aus dem Verhältnis der molaren Massen:

56 g/mol + 44 g/mol → 100 g/mol

Damit wird gleichzeitig die mögliche Menge an gebundenem CO₂ im Verhältnis zur eingesetzten Menge CaO bestimmt (44:56). Die chemische Reaktion ist exotherm und als Reaktionsprodukt entsteht Kalziumkarbonat CaCO₃.
2. Als weiterer alternativer Reaktionspartner für CO₂ kommt das Magnesiumoxid MgO in der Schlacke in Frage.

| | |
|---|---|
| MgO + CO₂ → MgCO₃ | ΔH° = - 116 kJ/mol |

Als Reaktionsprodukt des ebenfalls exothermen Prozesses entsteht Magnesit MgCO₃. Das molare Reaktionsverhältnis CO₂ zu MgO verhält sich wie 44 : 40.

Wesentlich für die CO₂ - Bindung ist die Reaktion unmittelbar nach Abguss der Schlacke unter Nutzung der vorhandenen hohen Temperatur. Damit entfällt ein ansonsten nach Abkühlung notwendiges Wiederaufheizen der Schlacke für die Reaktionen. Neben dem wirtschaftlichen Vorteil des Prozesses direkt im Anschluss an einen Hüttenprozess, steht durch die hohe Temperatur von ca. 800 °C das Kalziumoxid als Reaktionspartner für das CO₂ zur Verfügung. Bei der Abkühlung der Schlacke kristallisiert der Freikalk [CaO] in den o.g. Drei- bzw. Zweistoffphasen Gehlenit und Ackermanit.

Ein weiterer wirtschaftlicher Vorteil des erfindungsgemäßen Verfahrens ist nicht nur die dauerhafte Minderung und Bindung von CO₂ sondern das gleichzeitig entstehende Reaktionsprodukt Kalkstein CaCO₃. Kalkstein besitzt durch die hohe mengenmäßige und breite Anwendung im gesamten Bauwesen eine überragende Bedeutung.

Das CO₂ wird vorteilhafter Weise z.B. aus dem Rauchgas von Kraftwerken abgetrennt, verdichtet in Rohrleitungen zur heißen Hüttenschlacke transportiert. Der Transport von Gasen ist einfach und im Falle von unbrennbaren CO₂ mit niedrigem Sicherheits - und Gefahrengrad. Die Wirtschaftlichkeit beim Transport kann durch Verdichten des CO₂ weiter erhöht werden.
Häufig sind etwa die Braun- und Steinkohle - Kraftwerke zur Erzeugung elektrischer Energie, die große Mengen CO₂ über die Ab - und Rauchgase emittieren nicht sehr weit von den Stahlerzeugern angesiedelt. Letztere benötigen die elektrische Energie für den direkten Hüttenprozess/Elektroofen, oder für die nachgeschalten Walzwerke. Diese Bindung und Nachbarschaft ist optimal für eine Kooperation zur Reduktion und Minderung der CO₂ - Emission. In einer besonderen Ausgestaltung des Verfahrens kann das CO₂ auch zwischengespeichert werden, um den zeitlichen und örtlichen Reaktionsablauf an die entsprechenden Verfahrensschritte des Hüttenwerkes anzupassen und zu optimieren.

Vorteilhaft wird die Reaktions- und Prozesskammer unmittelbar an das Hüttenwerk angeschlossen und die flüssige Schlacke direkt in den Prozessraum eingegeben. Der Prozessraum ist dafür besonders ausgeführt, um die heiße Schlacke in einer großen Oberfläche zu vergießen. Damit erhält das einströmende CO₂ - Gas eine große Reaktionsfläche und es entsteht eine optimale Nutzung der CaO Komponente in der Schlacke. In einer Ausgestaltung des Reaktionsraumes wird die heiße Schlacke über vorgeheizte Kokillen mit fein verteilter Oberflächenstruktur gegossen und mit dem CO₂ - Gas allseitig umströmt. Eine besonders große Oberfläche zur Bindung CO₂ und Versäuerung des CaO wird erhalten, indem das CO₂ ähnlich der Hüttenverfahren, unter hohem Druck in die Schlacke, bevorzugt in 1 - 3 cm dünnen Schlacke-Schichten eingeblasen wird.

Aufgrund der hohen Wärmekapazität der Schlacke kann die notwendige Basisreaktion mit CO₂ mehrfach angeboten und durchgeführt werden. Dadurch erhöht sich die Effektivität des Verfahrens.

Die Reaktionskammer kann in einer besonderen Ausgestaltung mit Drehtellern oder drehbaren Plattformen versehen sein, wobei durch die Drehung und die entstehenden Fliehkräfte die im Tellerzentrum zugeführte flüssige Schlacke zum Tellerrand als dünne Schicht homogen verteilt und so einer optimalen Reaktion mit den einströmenden CO₂ dient.

Zwecks Beschleunigung der Reaktionen und Vergrößerung der für die Reaktionen maßgeblichen Oberflächen des Gases und der Vorrichtung wird das einzubindende Kohlendioxid eingeblasen und somit der auf die Reaktionen wirkende Druck erhöht.

## Patentansprüche

1. Verfahren zur Einbindung von umweltschädigendem Kohlendioxid unter Hinzuziehung von Elementoxiden aus den technischen Prozessen von Hochöfen der Hütten-, Stahl- oder Gießereiindustrie, **dadurch gekennzeichnet, dass** das einzubindende umweltschädigende Kohlendioxid nach der jeweiligen Beendigung des Hochofenabstiches zur direkten Nutzung der Wärmeenergie den Bereichen des Entstehungsortes der Hochofenschlacken in komprimierter Form und die CO₂ - Konzentration steuernd solange zugeführt wird, solange die in der Hochofenschlacke vorhandene Wärmemenge für die Durchführung der jeweiligen Einbindungsverfahren genügt und die hinreichende Menge an Elementoxiden vorhanden ist, zugeleitet wird, in denen die Hochofenschlacke eine Wärmeenergie im Temperaturbereich 400 °C bis 1000 °C aufweist, insbesondere im Temperaturbereich von 800 °C bis 1000 °C aufweist, und in diesen örtlichen Bereichen mit in den Hochofenschlacken enthaltenen Elementoxiden und/oder deren ionisierten Zuständen reaktiv in Verbindung gebracht wird.

2. Verfahren nach Patentanspruch 1, **dadurch gekennzeichnet, dass** das bei der Einbindung von Kohlendioxid mit den Calciumoxidbestandteilen entstehende CaCO₃ zur Herstellung von Kalkstein genutzt wird.

3. Verfahren nach Patentanspruch 1, **dadurch gekennzeichnet, dass** das bei der Einbindung von Kohlendioxid mit den Magnesiumoxidbestandteilen entstehende MgCO₃ zur Herstellung von Magnesit genutzt wird.

4. Verfahren nach den Patentansprüchen 1, 2 und 3, **dadurch gekennzeichnet, dass** bei andauernder Zuführung von Kohlendioxid während des Abkühlungsvorganges der Hochofenschlacken bei Unterschreitung der jeweilig vorgegebenen Mindesttemperaturen die Stoffverbindungen Kalkstein (CaCO₃) und Magnesit (MgCO₃) mittels an sich bekannter Trennverfahren ausgesondert werden.

## Claims

1. Process for the incorporation of environmentally-harmful carbon dioxide with the inclusion of elemental oxides from the technical processes of blast furnaces in the metallurgical, steel or foundry industry, **characterised in that,** the environmentally-harmful carbon dioxide to be incorporated is supplied after the respective termination of the blast furnace tapping for the direct use of thermal energy to the areas of the origin of the blast furnace slag in compressed form and the CO₂ - concentration controlled as long as the amount of heat available in the blast furnace slag for the implementation of the respective incorporation method is sufficient and the sufficient level of elemental oxides is available, in which the blast furnace slag shows a heat energy in the temperature range 400 °C to 1000 °C, in particular in the temperature range of 800 °C to 1000 °C, and in these local areas with elemental oxides contained in the blast furnace slag and / or whose ionised states are reactively bonded.

2. Process according to patent claim 1, **characterized in that** the CaCO₃ formed by the incorporation of carbon dioxide with the calcium oxide constituents is used for the production of limestone.

3. Process according to claim 1, **characterized in that** the MgCO3 resulting from the incorporation of carbon dioxide with the magnesium oxide constituents is used for the production of magnesite.

4. Process according to the patent claims 1,2 and 3, **characterized in that,** if the continuous supply of carbon dioxide during the cooling process of the blast furnace slags falls below the respective specified minimum temperatures, the material compounds limestone (CaCO3) and magnesite (MgCO3) are separated out by means of separation processes known per se.

## Revendications

1. Procédé pour la capture de dioxyde de carbone nuisible pour l'environnement à l'aide d'oxydes élémentaires provenant des procédés techniques des hauts fourneaux de l'industrie métallurgique, sidérurgique ou de la fonderie, **caractérisé en ce que** le dioxyde de carbone nocif pour l'environnement à capturer est transféré dans les régions du lieu d'origine du laitier du haut fourneau sous forme comprimée et la concentration de CO₂ est contrôlée, afin d'utiliser directement l'énergie thermique une fois le soutirage du haut fourneau terminé, tant que la quantité de chaleur disponible dans le laitier du haut fourneau est suffisante pour l'exécution du procédé de capture et la quantité suffisante d'oxydes élémentaire est disponible, dans lequel le laitier de haut fourneau comporte une énergie thermique dans une plage de température comprise entre 400 °C et 1000 °C, en particulier dans une plage de température comprise entre 800 °C et 1000 °C, et le dioxyde de carbone est apporté dans ces zones locales pour réagir et former des composés avec les oxydes élémentaires contenus dans les laitiers de hauts fourneaux et/ou avec leurs états ionisés.

2. Procédé selon la revendication 1, **caractérisé en ce que** le CaCO₃ formé par l'incorporation de dioxyde de carbone avec les constituants d'oxyde de calcium est utilisé pour la production de calcaire.

3. Procédé selon la revendication 1, **caractérisé en ce que** le MgCO3 résultant de l'incorporation de dioxyde de carbone avec les constituants d'oxyde de magnésium est utilisé pour la production de magnésite.

4. Procédé selon les revendications de brevet 1,2 et 3, **caractérisé en ce que,** si l'apport continu de dioxyde de carbone pendant le processus de refroidissement des scories du haut fourneau tombe en dessous des températures minimales spécifiées respectives, les matériaux composés de calcaire (CaCO3) et de magnésite (MgCO3) sont séparés par des procédés de séparation connus en soi.
